# EUROPÄISCHE PATENTANMELDUNG

(11) **EP 2 071 209 A1**
(43) Veröffentlichungstag der Anmeldung: **17.06.2009**
(21) Anmeldenummer: 07024119.5
(22) Anmeldetag: 12.12.2007
(51) Int. Cl.: F16D 69/02, C08J 5/14

(54) **Nichtmetallischer Reibbelag**

(71) Anmelder: Hoerbiger Antriebstechnik GmbH, 86956 Schongau (DE)
(72) Erfinder: Fuerguth, Werner, 87640 Biessenhofen/Altdorf (DE)
(74) Vertreter: Schmitz, Hans-Werner

(57) **Zusammenfassung**

Die Erfindung betrifft einen nichtmetallischen Reibbelag für nasslaufende Synchronisierungen, Kupplungen und/oder Bremsen, mit einem Reibbelagmaterial, das Fasermaterial, Füllstoffe und Bindemittel enthält, **dadurch gekennzeichnet, dass** das Fasermaterial 30 % bis 80 % Basaltfasern aufweist, die mit 20 % bis 70 % Kunstharz versetzt sind.

## Beschreibung

Die Erfindung betrifft einen nichtmetallischen Reibbelag gemäß dem Oberbegriff des Anspruchs 1.

Ein nichtmetallischer Reibbelag ist aus der DE 103 42 520 A1 bekannt, wobei es sich hierin allerdings um einen Trocken-Reibbelag zur Ausrüstung einer Trockenreibungsvorrichtung mit einem Gewichtsanteil von 5 bis 70% an Basalt-Endlosfasern handelt.

Nichtmetallische Reibbeläge für nasslaufende Synchronisierungen und Kupplungen werden in der Regel aus Fasermaterial, Füllstoffen und Bindemittel hergestellt. Das üblicherweise eingesetzte Fasermaterial besteht aus einer Kohle-, Aramid-, Phenolharz-, Wolastonit-, Keramikfaser, usw., oder aus einem Fasergemisch. Die oben genannten Fasern werden auch als gewobenes Material bzw. in Vlies- oder Filzform angeboten und sind mit entsprechender Weiterbehandlung (Imprägnierung) auch als nasslaufender Reibwerkstoff einsetzbar. Basaltfasern werden als Bestandteil in trockenlaufenden Reibbelägen neben anderen Fasermaterialien, Füllstoffen und Bindemitteln verwendet (s. DE 103 42 520 A1). Die verwendete Faser hat generell einen sehr hohen Einfluss auf die tribologischen Eigenschaften des Reibbelags und ist in den meisten Fällen die kostenintensivste Komponente.

So sind aus der DE 103 42 520 A1 und der US-A-4 663 368 Reibbeläge für trockenlaufende Synchronisierungen bekannt, die mit Basaltfasern als Bestandteil arbeiten. Ferner sind aus der JP 2004/331861 A und der DE 22 54 294 A1 Reibbeläge bekannt, die Basaltfasern aufweisen.

Allerdings haben im Rahmen der Erfindung durchgeführte Untersuchungen ergeben, dass diese Reibbeläge für eine Anwendung in einer nasslaufenden Synchronisierung nicht geeignet sind, da die Porösitäten dieser Reibbeläge für trockenlaufende Synchronisierungen in einem Bereich zwischen 1 % und 3 % liegen.

Es ist daher Aufgabe der vorliegenden Erfindung, einen nichtmetallischen Reibbelag für nasslaufende Synchronisierungen gemäß dem Oberbegriff des Anspruchs 1 zu schaffen, der ein Fasermaterial einsetzt, das die tribologischen Eigenschaften des Reibbelags verbessert und dessen Produktionskosten verringert.

Die Lösung dieser Aufgabe erfolgt durch die Merkmale des Anspruchs 1.

Die Unteransprüche haben vorteilhafte Weiterbildungen der Erfindung zum Inhalt.

So ist es durch den Einsatz eines überwiegenden Anteils einer Basaltfaser als nichtmetallisches Fasermaterial für einen nasslaufenden Reibbelag möglich, die tribologischen Eigenschaften eines Carbonreibbelags zu erzielen, wobei die verwendete Basaltfaser vergleichsweise jedoch wesentlich günstiger in der Herstellung ist.

Durch die Zusammensetzung des erfindungsgemäßen Reibbelages wird eine Porösität von 10 % bis 50 % erreicht, was seine Eignung für die Anwendung in nasslaufenden Synchronisierungen gewährleistet.

Der erfindungsgemäße Reibbelag für nasslaufende Synchronisierungen in Kupplungen weist einen Anteil von 30 % bis 80 % Basaltfasern und 20 % bis 70 % Kunstharz auf. Eine besonders vorteilhafte Ausgestaltung des erfindungsgemäßen Reibbelags weist 60 % bis 80 % Basaltfasern und 20 % bis 40 % Harz auf.

Als Kunstharz können bei besonders bevorzugten Ausführungsformen Phenolharz, Melaminharz, Amid-/Imid-Harze oder Epoxydharze verwendet werden.

Weitere Einzelheiten, Vorteile und Merkmale der Erfindung ergeben sich aus nachfolgender Beschreibung von Ausführungsbeispielen.

Bei einer weiteren besonders bevorzugten Ausführungsform ist es möglich, den nasslaufenden Reibbelag als Basaltfasergewebe auszubilden bzw. herzustellen.

Ein alternatives Verfahren zur Herstellung dieses erfindungsgemäßen Reibbelags besteht darin, die Basaltfasern auf einen Reibbelagträger aufzustreuen und mit diesem stoffschlüssig zu verbinden.

Darüber hinaus ist eine Herstellung dieses Reibbelags auch durch einen Papierprozess möglich.

## Patentansprüche

1. Nichtmetallischer Reibbelag für nasslaufende Synchronisierungen, Kupplungen und/oder Bremsen, mit einem Reibbelagmaterial, das Fasermaterial, Füllstoffe und Bindemittel enthält, **dadurch gekennzeichnet, dass** das Fasermaterial 30 % bis 80 % Basaltfasern aufweist, die mit 20 % bis 70 % Kunstharz versetzt sind.

2. Nichtmetallischer Reibbelag nach Anspruch 1, **dadurch gekennzeichnet, dass** 60 % bis 80 % Basaltfaseranteil und 20 % bis 40 % Kunstharzanteil verwendet werden.

3. Nichtmetallischer Reibbelag nach Anspruch 1 oder 2, **dadurch gekennzeichnet, dass** die Basaltfasern als Gewebe ausgebildet sind.

4. Verfahren zur Herstellung eines nichtmetallischen Reibbelags für nasslaufende Synchronisierungen mit einem Reibbelagmaterial, das Fasermaterial, Füllstoffe und Bindemittel enthält, **dadurch gekennzeichnet, dass** die Basaltfasern auf einem Reibbelagträger (3) aufgestreut werden.

5. Verfahren zur Herstellung eines nichtmetallischen Reibbelags für nasslaufende Synchronisierungen mit einem Reibbelagmaterial, das Fasermaterial, Füllstoffe und Bindemittel enthält, **dadurch gekennzeichnet, dass** der die Basaltfasern enthaltende Reibbelag durch einen Papierprozess hergestellt wird.
